# EUROPEAN PATENT SPECIFICATION

(11) **EP 3 524 918 B1**
(45) Date of publication and mention of the grant of the patent: **30.12.2020**
(21) Application number: 18214017.8
(22) Date of filing: 10.04.2014
(51) Int. Cl.: F28F 13/12

(54) **HYGIENIC HEAT EXCHANGER**
HYGIENISCHER WÄRMETAUSCHER
ÉCHANGEUR DE CHALEUR HYGIÉNIQUE

(30) Priority: 11.04.2013 DK PA201300215
(43) Date of publication of application: 14.08.2019
(62) Document number(s) of the earlier application(s) in accordance with Art. 76 EPC: 14716811.6 / 2 984 438
(73) Proprietor: SPX Flow Technology Danmark A/S, 8600 Silkeborg (DK)
(72) Inventor: Poulsen, Ole, 7442 Engesvang (DK); Thorsen, Knud, 8883 Gjern (DK)
(74) Representative: Nordic Patent Service A/S

(56) References cited:
- WO-A1-2010/068157
- WO-A2-2009/148822
- US-A- 3 265 128
- US-A1- 2008 190 593

## Description

The present disclosure relates to a hygienic food product to food product tubular type heat exchanger that is suitable for us in food processing applications, i.e. a heat exchanger that can be easily and regularly cleaned inside and outside by ordinary cleaning in place by e.g. rinsing with an acidic fluid.

### BACKGROUND ART

Known food product tubular heat exchangers have a tube plate at each end of an elongated and typically cylindrical housing (shell) with a plurality of densely packed axial tubes extending between the two tube plates as a tube bundle. The ends of the tubes are received in corresponding through going holes in respective tube plates. During manufacturing of the heat exchanger the ends of the tubes are inserted into the holes and with a relatively tight fit and this relatively tight fit can be increased by rolling the inner side of the tubes so that the tube wall becomes thinner in the rolled area thereby tries to increase its diameter which causes the outer surface of the rolled tube area to be pressed against wall of the hole in the tube plate. Rolling is only applied in the end portion of the tube that is received inside a hole in the tube plate. Thereafter, the end of the tube is welded to the tube plate at the outer side of the tube. This procedure gives a strong connection that is satisfactory in various aspects such as production costs, reliability and preventing leakage of liquid from the interior of the cylindrical housing.

However, in the field of hygienic heat exchangers, i.e. heat exchangers that are suitable for use with liquid food products and that come in direct contact with liquid food products it is of utmost importance to avoid sharp corners, crevices, fissures, pockets or other forms of recesses are difficult to rinse and sterilize and where food rests can remain thus risking that microorganisms start to flourish.

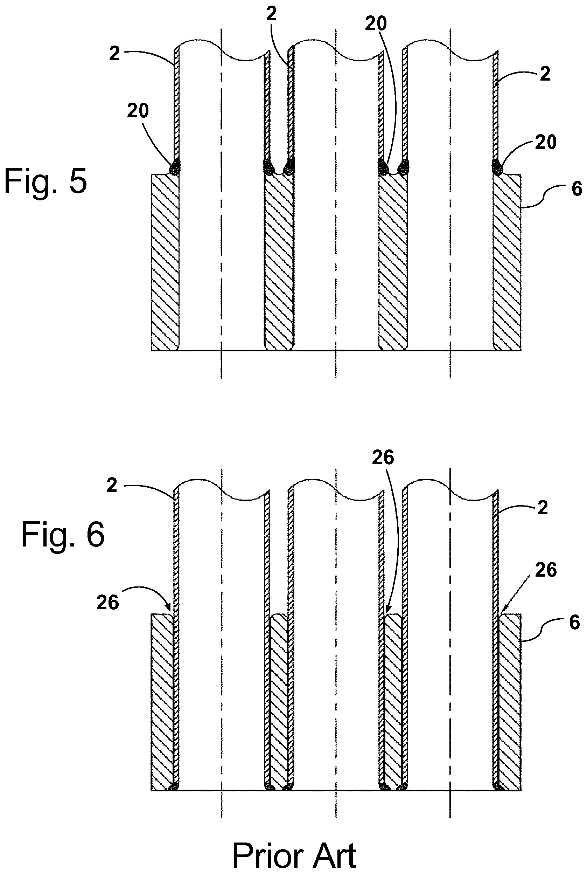

The rolled joint with the weld at the outer side of the tube plates in the known heat exchangers (as shown in Fig. 6) does not live up to the hygienic requirements because it leaves crevices between the outer surface of the tube and the inner surface of the holes of the tube plate and it leaves a sharp corner 26 at the transition between the inner side of the tube plate and the outer surface of the tubes. Therefore, in these type of heat exchangers food products can only be used in the lumen of the tubes and not in the interior of the elongated housing.

WO 2010/068157 A1, US 2008/190593 A1 and WO 2009/148822 A2 disclose heat eschangers relevant to the present invention.

### DISCLOSURE

On this background, it is an object of this disclosure to provide a hygienic axial tube heat exchanger that can operate with liquid food products in the lumen of the tubes and also in the interior of heat exchanger that surrounds the tubes in order to provide a food product to food product heat exchanger, i.e. a heat exchanger that overcomes or at least reduces the drawbacks mentioned above.

The object above is achieved by providing a hygienic food product to food product heat exchanger, the heat exchanger comprising: an elongated and hollow cylindrical housing; a metal tube plate at each of the opposite ends of the elongated housing; a tube bundle with a plurality of tightly spaced metal tubes axially extending between the tube pates with the ends of the tubes being received in correspondingly tightly spaced holes in the respective tube plates or with the lumen of the tubes being aligned with said correspondingly tightly spaced holes in the tube plates; a first inlet connected to the openings at one end of the tubes for allowing a first liquid food product medium to enter the interior of the tubes; a first outlet connected to the openings at the other end of the tubes for allowing the first liquid food product medium to leave the interior of the tubes; a second inlet for allowing a second liquid food product to enter the interior of the elongated cylindrical housing; a second outlet for allowing a second liquid food product to leave the interior of the elongated housing; the second outlet being axially spaced from the second inlet so that the second liquid food product flows over the outer side of the tubes between the second inlet and the second outlet; the second inlet can be tangentially directed and the second outlet can be tangentially directed for causing a helical flow path for the second liquid food medium when it flows from the second inlet to the second outlet.

In an embodiment the second inlet comprises a tangentially directed tubular conduit connected to the elongated and hollow cylindrical housing and wherein the second outlet comprises a tangentially directed tubular conduit connected to the elongated and hollow cylindrical housing.

In another embodiment the tangentially directed tubular conduit of the second inlet has an axis that is offset relative to the axis of the elongated cylindrical housing and the tangentially directed tubular conduit of the second outlet has an axis that is offset relative to the axis of the elongated cylindrical housing.

In another embodiment the heat exchanger further comprises a helical rod wound around and secured to the tube bundle for stimulating the second liquid food product to follow a helical flow path when it flows from the second inlet to the second outlet.

Further objects, features, advantages and properties of the hygienic heat exchanger and method according to the disclosure will become apparent from the detailed description as well as the appended claims.

### BRIEF DESCRIPTION OF THE DRAWINGS

In the following detailed portion of the present description, the disclosure will be explained in more detail with reference to the exemplary embodiments shown in the drawings, in which:
Fig. 1, is a sectional view through a hygienic heat exchanger according to an example embodiment,
Fig. 2, is a cross-sectional view of the hygienic heat exchanger shown in Fig. 1,
Fig. 3, is a sectional view showing details of the end portion of a hygienic heat exchanger shown in Fig. 1,
Fig. 4, is a diagrammatic depiction of the flow of a liquid medium around the tubes of the hygienic heat exchanger shown in Fig. 1
Fig. 5 is a sectional view showing details of another example embodiment of end portion of a hygienic heat exchanger shown in Fig. 1, and
Fig. 6 is a sectional view showing details of a prior art hygienic heat exchanger shown in Fig. 1.

### DETAILED DESCRIPTION OF PREFERRED EMBODIMENTS

In the following detailed description of the hygienic heat exchanger will be described by the example embodiments.

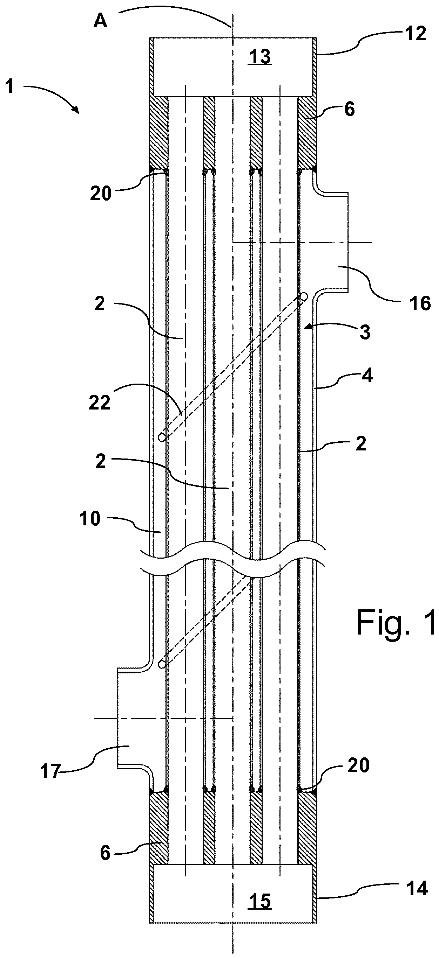

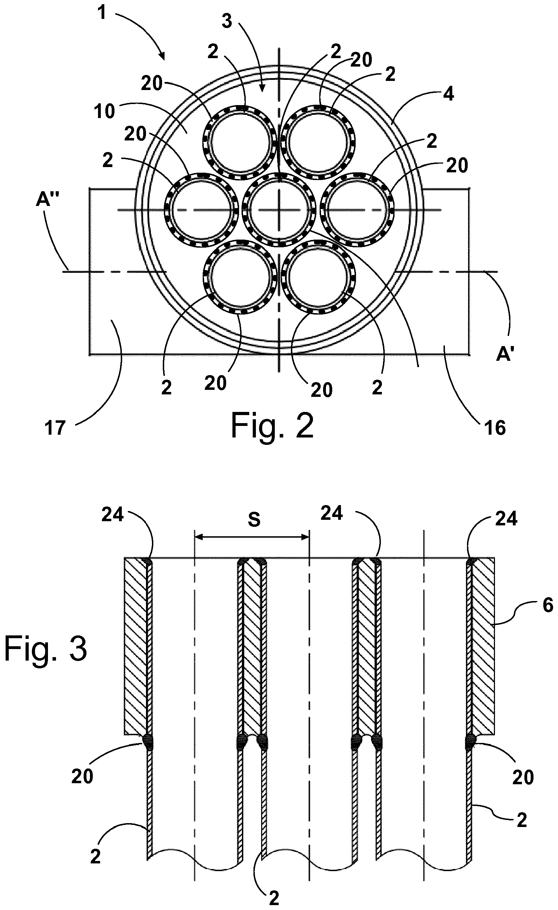

Figs. 1 to 3 show an example embodiment of a single pass straight-tube heat exchanger 1. The heat exchanger 1 is provided with a plurality of closely spaced inner tubes 2 that together from a tube bundle 3 that is situated in a shell 4. The shell 4 forms an elongated and hollow cylindrical housing 4. The inner tubes 2 can either be plain or corrugated.

The ends of the shell 4 are closed by a tube plate 6 at each end of the shell 4. The tube plates 6 are provided with a plurality of tightly spaced through going holes that are arranged in a suitable pattern.

The disk shaped tube plates 6 have a substantial thickness, typically the thickness of the tube plates 6 is larger than the diameter of the tubes 2. The tube plates 6 sealingly secured to the respective end of the shell 6 and the tube plates are sealingly secured to the tubes 2 so as to create a hermetically sealed interior space 10 inside the shell 4 with one side of a tube plate 6 facing the interior of the heat exchanger 1 and the other side of the tube plates facing an inlet- or an outlet plenum.

A first inlet 12 with an inlet plenum 13 is situated at one of the ends of the shell 4. A first outlet 14 with an outlet plenum 15 is situated at the other end of the shell 4. The first inlet 12 allows a medium to enter the heat exchanger 1 and to flow through the lumen in the tubes 2 to the first outlet 14. The first outlet 14 allows the medium to leave the heat exchanger 1. The placement the first inlet 12 and the first outlet 14 can be interchanged so that the medium flows in the opposite direction through the lumen of the tubes 2.

The straight (corrugated or not) tubes 6 extend parallel and closely spaced, typically the center line to center line distance S is less than twice the outer diameter of the tubes 2, as a tube bundle 3 in the interior 10 of the heat exchanger 1.

The tubes 2, the tube plates 6 and the shell 4 are in an embodiment made from a corrosion resistant metal, such as stainless steel, so that the heat exchanger is strong and reliable, has good heat conducting qualities and can be disinfected or sterilized using an aggressive medium, such as a strong acid.

The longitudinal ends of the tubes 2 are received in the corresponding holes in the tube plates 6. In an embodiment the tubes 2 are inserted so deep into the holes that the ends of the tubes 2 are flush with the side of the tube plate 6 that faces the inlet- or outlet plenum. The holes in the tube plate 6 have essentially the same diameter as the outer diameter of the tubes 2 so that the tubes 2 fit quite precisely into the holes so that the tubes can be inserted in the holes with applying no more than a moderate force.

The joint between the tube plates 6 that faces the interior space 10 and the outer surface of the tubes 2 is a welded that provides a smooth rounded transition between the tubes 2 and the tube plate 6. The tubes 2 are in an embodiment secured to the tube plates 6 by a welded joint 20 that surrounds each of the tubes 2. The welded joint 20 is placed at the transition between a tube 2 and the tube plate 6, i.e. on the inwardly facing side of the tube plates 6. The welded joint 20 provides a smooth transition between the tube 2 and the tube plate 6 that is free of cracks, crevices, fissures and other recesses and therefore provides a hygienic construction that can be allowed to come in contact with food products since it can be effectively rinsed and sterilized. The welded joint 20 is also strong, reliable and provides for a hermetic seal.

The tubes 2 are welded to the tube plate at two positions, i.e. in addition to the connection at the inner side of the tube plate 6, the extremity of the tube 2 is connected to the tube plate 6 at the outer side of the tube plate 6 by a welded joint 24. The additional joint 24 at the outer side of the tube plate 6 reinforces the connection between the tubes 2 and the tube plate 6.

In an embodiment the welded joint 20 is created by welding from the lumen of the tube 2, so that the welded joint 20 is created from the inside of the tube 2. This is particularly advantageous since the space surrounding the tubes 2 is too small for applying a welding torch at the outer circumference of the tubes 2.

Thus, the joint is created by melting metal by welding between the tubes 2 and the tube plates 6 on the side of the tube plates 6 that faces the interior 10 of the elongated cylindrical housing.

By securing the tubes 2 with a welding joint 20 on the inner side of the tube plates 6 a smooth, crevice and fissure free connection is created between the tubes 2 and the tube plate 6 that is hygienic and therefore allows liquid food products to be used in the interior space 10 surrounding the tubes 2.

In an embodiment the distance S between the center lines of the tubes 2 is less than twice the outer diameter of the tubes 2. In an embodiment the tubes have an outer diameter between 10 mm and 50 mm, and preferably all of the tubes have the same diameter

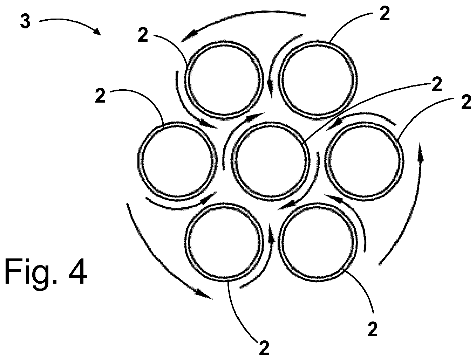

The heat exchanger 1 is provided with a second inlet 16 for allowing a second liquid food product or other medium to enter the interior 10 of the shell 4. The heat exchanger 1 is also provided with a second outlet 17 for allowing the second liquid food product to leave the interior 10. The second outlet 17 is axially spaced from the second inlet 16 so that the second liquid food product flows over the outer side of the tubes 2 between the second inlet 16 and the second outlet 17. The second inlet 16 is tangentially directed and the second outlet 17 is tangentially directed for causing a helical flow path for the second liquid food medium when it flows from the second inlet 16 to the second outlet 17, the tangential component of the helical flow path being illustrated in Fig. 4.

In an embodiment the second inlet 16 is formed by a tangentially directed tubular conduit connected to the shell 4 and the second outlet 17 is formed by a tangentially directed tubular conduit connected to the shell 4. The tangentially directed tubular conduit of the second inlet 16 has an axis A' that is offset relative to the axis A of the shell 4 and the tangentially directed tubular conduit of the second outlet 17 has an axis A" that is also offset relative to the axis A of the shell 4.

In an embodiment a helical rod 22 is wound around- and secured to the tube bundle 3 for stimulating the second liquid food product to follow a helical flow path when it flows from the second inlet 16 to the second outlet 17. The helical rod 22 is in an embodiment made of a corrosion resistant metal. In another embodiment the helical rod 22 is made of a plastic material. The helical rod 22 promotes the flow of the second liquid food product to assume a helical path, i.e. to have a tangential component in addition to an axial component. In an embodiment the steepness of the helix of the rod 22 is approximately 45 deg. The helical rod 22 may have a circular, polygonal, oval, square cross-sectional shape or other suitable shape.

In an embodiment the tube assembly including the helical rod can be pulled out of the shell 4 for inspection.

The placing of the second inlet 16 and the second outlet 17 can be interchanged, and the heat exchanger 1 can be arranged for parallel flow or counter flow.

The tangential component of the helical flow of the medium in the interior space 10 is illustrated in Fig. 4 by the curved arrows. The helical flow provides for a faster and more effective heat transfer between the medium and the outer surface of the tubes 2 when compared to a traditional parallel flow (a flow parallel with the tubes 2) and avoids fouling.

Fig. 5 shows yet another embodiment, this embodiment being similar to the embodiments described above, but with the essential difference that the tubes 2 are not inserted into the holes in the tube plate 6. Instead, the extremities of the tubes 2 are joined to the inner surface of tube plate 6 by welded joints 20. In this embodiment, the holes in the tube plate 6 are aligned with the lumen of the tubes 2.

Fig. 6 illustrates how the tubes 2 are connected to the two plates 6 in the prior art construction. The tubes 2 are inserted into the holes in the tube plates 6 and the extremities of the tubes 2 are connected to the tube plate 6 at the outer side of the tube plate 6 by welded joints 24. In the prior art there is a sharp corner 26 at the transition between the outer surface of the tubes 2 and the inwardly directed surface of the tube plate 6. Further, there are unavoidably crevices between the tubes 2 and the holes of the tube plate 6 in which they are received. Both the sharp corner 26 and the crevices will be exposed to any liquid that is present in the interior of the heat exchanger 1, and consequently, the prior art design is not hygienic or sterile and cannot be used for food products in the interior of the shell 4.Bacteria are typically less than 0.0003 mm and can easily hide in a sharp corner 26 so hygienic cleaning of the prior art heat exchanger is not possible.

The heat exchanger according to the disclosure has several advantages. One of the advantages is that the heat exchanger according to the disclose is hygienic on inner side (shell side), no prior art heat exchanger has this feature. Another advantage is that the heat exchanger according to the disclosure is hygienic on both sides, inwards and inside lumen of tubes. No prior art heat exchanger is hygienic on both sides. Another advantage is that the heat exchanger according to the disclosure has a hygienic design on inwards side (Shell side) that can be useful for sterile or aseptic food application. Another advantage of the heat exchanger according to the disclosure is that in prior heat exchangers art bacteria or viruses can hide in crevices or in corner 26, and with the heat exchanger according to the present disclosure no bacteria or viruses can hide from cleaning or disinfection. Bacteria are smaller than 0,0003 mm and viruses even smaller, thus it is unique the design in the heat exchanger according to the present disclosure that prevents very small bacteria and viruses from hiding. Another advantage of the heat exchanger according to the disclosure is a new and higher level for Hygienic design is presented for inwards side of a Compact Tubular Heat Exchanger. Another advantage of the heat exchanger according to the disclosure that it is designed for use in aseptic food processing.

Different embodiments or implementations may yield one or more of the following advantages. It should be noted that this is not an exhaustive list and there may be other advantages which are not described herein.

Although the teaching of this application has been described in detail for purpose of illustration, it is understood that such detail is solely for that purpose, and variations can be made therein by those skilled in the art without departing from the scope as defined by the appended claims. The term "comprising" as used in the claims does not exclude other elements or steps. The term "a" or "an" as used in the claims does not exclude a plurality.

## Claims

1. A hygienic food product to food product heat exchanger, said heat exchanger comprising:
an elongated and hollow cylindrical housing (4);
a metal tube plate (6) at each of the opposite ends of said elongated housing;
a tube bundle (3) with a plurality of tightly spaced metal tubes (2) axially extending between said tube plates with the ends of said tubes being received in correspondingly tightly spaced holes in said respective tube plates or with the lumen of the tubes (2) being aligned with said correspondingly tightly spaced holes in the tube plates;
a first inlet (12) connected to the openings at one end of said tubes for allowing a first liquid food product medium to enter the interior of said tubes;
a first outlet (14) connected to the openings at the other end of said tubes for allowing said first liquid food product medium to leave the interior of said tubes;
a second inlet (16) for allowing a second liquid food product to enter the interior of said elongated cylindrical housing; and 01634-PCT-EP-DIV
a second outlet : (17) for allowing a second liquid food product to leave the interior of said elongated housing;
said second outlet (17) being axially spaced from said second inlet (16) so that said second liquid food product flows over the outer side of said tubes (2) between said second inlet and said second outlet;
said second inlet (16) being tangentially directed and said second outlet (17) being tangentially directed for causing a helical flow path for said second liquid food medium when it flows from said second inlet to said second outlet.

2. A heat exchanger according to claim 1, wherein said second inlet (16) comprises a tangentially directed tubular conduit connected to said elongated and hollow cylindrical housing (4) and wherein said second outlet comprises a tangentially directed tubular conduit connected to said elongated and hollow cylindrical housing.

3. A heat exchanger according to claim 2, wherein said tangentially directed tubular conduit of said second inlet (16) has an axis that is offset relative to the axis of said elongated cylindrical housing and said tangentially directed tubular conduit of said second outlet has an axis that is offset relative to the axis of said elongated cylindrical housing.

4. A heat exchanger according to any one of claims 1 to 3, further comprising a helical rod (22) wound around and secured to said tube bundle for stimulating said second liquid food product to follow a helical flow path when it flows from said second inlet to said second outlet.

5. A heat exchanger according to 4, wherein the steepness of the helical rod (22) is approximately 45 deg.

6. A heat exchanger according to 4 or 5, wherein the helical rod (22) can be pulled out of a shell for inspection.

7. A heat exchanger according to any one of claims 1 to 6, wherein the thickness of the tube plates (6) is larger than the diameter of the tubes.

8. A heat exchanger according to any one of claims 1 to 7, wherein the tube plates (6) are sealingly secured to the respective ends of the shell and the tube plates are sealingly secured to the tubes so as to create a hermetically sealed interior space inside the shell with the one side of the tube plates facing the interior of the heat exchanger and the other side of the tube plates facing an inlet or an outlet plenum.

9. A heat exchanger according to any one of the claims 1 to 8, wherein the center line to centerline distance of the tubes (2) extending parallel and closely spaced is less that twice the outer diameter of the tubes.

10. A heat exchanger according to any one of the claims 1 to 9, wherein the tubes (2) have an outer diameter between 10 mm and 50 mm.

11. A heat exchanger according to any one of the claims 1 to 10, wherein the tubes (2) are inserted so deep into the holes that the ends of the tubes are flush with the side of the tube plate that faces the inlet or outlet plenum.

12. A heat exchanger according to claim 11, wherein the tubes further are welded to the tube plate at the extremity of the tubes for connecting the tube plate (6) at the outer side of the tube plate by a welded joint.

13. A heat exchanger according to any one of the claims 1 to 12, wherein the welded joint (20) is created by welding from the lumen of the tube, so that the welded joint is created from the inside of the tube.

14. A method for operating a hygienic food product to food product heat exchanger according to any one of the claims 1 to 13, wherein a liquid food product is allowed to enter at the first inlet and flow through the lumen of the tubes (2) to the first outlet and a second liquid food product is allowed to enter at the second inlet and flow through the interior space to the second outlet.

15. Use of a hygienic food product to food product heat exchanger according to any one of the claims 1 to 13, for aseptic or sterile food processing.

## Patentansprüche

1. Hygienischer Wärmetauscher für Lebensmittelprodukt zu Lebensmittelprodukt, wobei der Wärmetauscher Folgendes umfasst:
ein längliches und hohles zylindrisches Gehäuse (4) ;
eine Metallrohrplatte (6) an jedem der entgegengesetzten Enden des länglichen Gehäuses;
ein Rohrbündel (3) mit einer Vielzahl von eng beabstandeten Metallrohren (2), die sich axial zwischen den Rohrplatten erstrecken, wobei die Enden der Rohre in entsprechend dicht beabstandeten Löchern in den jeweiligen Rohrplatten aufgenommen werden, oder wobei das Lumen der Rohre (2) auf die entsprechend dicht beabstandeten Löcher in den Rohrplatten ausgerichtet sind;
einen ersten Einlass (12), der an die Öffnungen an einem Ende der Rohre angeschlossen ist, um zu ermöglichen, dass ein erstes flüssiges Lebensmittelproduktmedium in das Innere der Rohre dringt;
einen ersten Auslass (14), der an die Öffnungen an dem anderen Ende der Rohre angeschlossen ist, um zu ermöglichen, dass das erste flüssige Lebensmittelproduktmedium das Innere der Rohre verlässt;
einen zweiten Einlass (16), um zu ermöglichen, dass ein zweites flüssiges Lebensmittelprodukt in das Innere des länglichen, zylindrischen Gehäuses dringt; und
einen zweiten Auslass (17) um zu ermöglichen dass ein zweites flüssiges Lebensmittelprodukt das Innere des länglichen Gehäuses verlässt;
wobei der zweite Auslass (17) axial von dem zweiten Einlass (16) beabstandet ist, sodass das zweite flüssige Lebensmittelprodukt über die Außenseite der Rohre (2) zwischen dem zweiten Einlass und dem zweiten Auslass fließt;
wobei der zweite Einlass (16) tangential ausgerichtet ist, und der zweite Auslass (17) tangential ausgerichtet ist, um einen spiralförmigen Fließweg für das zweite flüssige Lebensmittelmedium zu verursachen, wenn es vom zweiten Einlass zum zweiten Auslass fließt.

2. Wärmetauscher nach Anspruch 1, wobei der zweite Einlass (16) eine tangential ausgerichtete Rohrleitung umfasst, die an das längliche und hohle zylindrische Gehäuse (4) angeschlossen ist, und wobei der zweite Auslass eine tangential ausgerichtete Rohrleitung umfasst, die an das längliche und hohle, zylindrische Gehäuse angeschlossen ist.

3. Wärmetauscher nach Anspruch 2, wobei die tangential ausgerichtete Rohrleitung des zweiten Einlasses (16) eine Achse hat, die in Bezug auf die Achse des länglichen, zylindrischen Gehäuses versetzt ist, und wobei die tangential ausgerichtete Rohrleitung des zweiten Auslasses eine Achse hat, die in Bezug auf die Achse des länglichen, zylindrischen Gehäuses versetzt ist.

4. Wärmetauscher nach einem der Ansprüche 1 bis 3, ferner umfassend einen spiralförmigen Stab (22), der um das Rohrbündel gewickelt und an ihm befestigt ist, um das zweite flüssige Lebensmittelprodukt anzuregen, einem spiralförmigen Fließweg zu folgen, wenn es vom zweiten Einlass zum zweiten Auslass fließt.

5. Wärmetauscher nach 4, wobei die Steilheit des spiralförmigen Stabs (22) ungefähr 45 Grad beträgt.

6. Wärmetauscher nach 4 oder 5, wobei der spiralförmige Stab (22) zur Inspektion aus einer Hülse herausgezogen werden kann.

7. Wärmetauscher nach einem der Ansprüche 1 bis 6, wobei die Dicke der Rohrplatten (6) größer ist als der Durchmesser der Rohre.

8. Wärmetauscher nach einem der Ansprüche 1 bis 7, wobei die Rohrplatten (6) dichtend an den jeweiligen Enden der Hülse befestigt sind und die Rohrplatten dichtend an den Rohren befestigt sind, um einen hermetisch abgedichteten Innenraum in der Hülse zu bilden, wobei die eine Seite der Rohrplatten dem Inneren des Wärmetauschers gegenüberliegt, und die andere Seite der Rohrplatten einem Einlass- oder einem Auslassplenum gegenüberliegt.

9. Wärmetauscher nach einem der Ansprüche 1 bis 8, wobei der Abstand von Mittellinie zu Mittellinie der Rohre (2), die sich parallel und eng beabstandet erstrecken, kleiner ist als der doppelte Außendurchmesser der Rohre.

10. Wärmetauscher nach einem der Ansprüche 1 bis 9, wobei die Rohre (2) einen Außendurchmesser von 10 mm bis 50 mm aufweisen.

11. Wärmetauscher nach einem der Ansprüche 1 bis 10, wobei die Rohre (2) so tief in die Löcher eingesetzt werden, dass die Enden der Rohre mit der Seite der Rohrplatte bündig sind, die dem Einlass- oder Auslassplenum gegenüberliegt.

12. Wärmetauscher nach Anspruch 11, wobei die Rohre ferner an die Rohrplatte an der Extremität der Rohre angeschweißt werden, um die Rohrplatte (6) an der Außenseite der Rohrplatte durch eine Verschweißung anzuschließen.

13. Wärmetauscher nach einem der Ansprüche 1 bis 12, wobei die Verschweißung (20) durch Schweißen vom Lumen des Rohrs aus erfolgt, sodass die Verschweißung von der Innenseite des Rohrs aus erfolgt.

14. Verfahren zum Betätigen eines hygienischen Wärmetauschers von Lebensmittelprodukt zu Lebensmittelprodukt nach einem der Ansprüche 1 bis 13, wobei ermöglicht wird, dass ein flüssiges Nahrungsmittelprodukt am erste Einlass eindringt und durch das Lumen der Rohre (2) zum ersten Auslass fließt, und ein zweites flüssiges Lebensmittelprodukt am zweiten Einlass eindringt und durch den Innenraum zum zweiten Auslass fließt.

15. Anwendung eines hygienischen Wärmetauschers für Lebensmittelprodukt zu Lebensmittelprodukt nach einem der Ansprüche 1 bis 13 für aseptische oder sterile Lebensmittelverarbeitung.

## Revendications

1. Produit alimentaire hygiénique pour échangeur de chaleur de produit alimentaire, ledit échangeur de chaleur comprenant :
un boîtier cylindrique allongé et creux (4) ;
une plaque en tube métallique (6) à chacune des extrémités opposées dudit boîtier allongé ;
un faisceau de tubes (3) comportant une pluralité de tubes métalliques serrés étroitement (2) s'étendant axialement entre lesdites plaques en tube avec les extrémités desdits tubes étant reçues dans des trous espacés étroitement de manière correspondante desdites plaques en tube respectives ou avec le lumen des tubes (2) étant aligné avec lesdits trous espacés étroitement de manière correspondante des plaques en tube ;
une première admission (12) connectée aux ouvertures à une extrémité desdits tubes pour permettre à un premier fluide de produit alimentaire liquide d'entrer dans l'intérieur desdits tubes ;
une première évacuation (14) connectée aux ouvertures à l'autre extrémité desdits tubes pour permettre audit premier fluide de produit alimentaire liquide de quitter l'intérieur desdits tubes ;
une seconde admission (16) pour permettre à un second produit alimentaire liquide d'entrer dans l'intérieur dudit boîtier cylindrique allongé ; et
une seconde évacuation (17) pour permettre à un second produit alimentaire liquide de quitter l'intérieur dudit boîtier allongé ;
ladite seconde évacuation (17) étant axialement espacée de ladite seconde admission (16), de sorte que ledit second produit alimentaire liquide s'écoule sur la face extérieure desdits tubes (2) entre ladite seconde admission et ladite seconde évacuation ;
ladite seconde admission (16) étant dirigée tangentiellement et ladite seconde évacuation (17) étant dirigée tangentiellement pour établir un parcours d'écoulement hélicoïdal pour ledit second fluide de produit alimentaire liquide lorsqu'il s'écoule depuis ladite seconde admission jusqu'à ladite seconde évacuation.

2. Échangeur de chaleur selon la revendication 1, dans lequel ladite seconde admission (16) comprend une conduite tubulaire dirigée tangentiellement connectée audit boîtier cylindrique allongé et creux (4) et dans lequel ladite seconde évacuation comprend une conduite tubulaire dirigée tangentiellement connectée audit boîtier cylindrique allongé et creux.

3. Échangeur de chaleur selon la revendication 2, dans lequel ladite conduite tubulaire dirigée tangentiellement de ladite seconde admission (16) a un axe qui est décalé par rapport à l'axe dudit boîtier cylindrique allongé et ladite conduite tubulaire dirigée tangentiellement de ladite seconde évacuation a un axe qui est décalé par rapport à l'axe dudit boîtier cylindrique allongé.

4. Échangeur de chaleur selon l'une quelconque des revendications 1 à 3, comprenant en outre une barre hélicoïdale (22) enroulée autour et fixée audit faisceau de tubes pour stimuler ledit second produit alimentaire liquide afin qu'il suive un parcours d'écoulement hélicoïdal lorsqu'il s'écoule depuis ladite seconde admission jusqu'à ladite seconde évacuation.

5. Échangeur de chaleur selon la revendication 4, dans lequel la pente de la barre hélicoïdale (22) est approximativement de 45 degrés.

6. Échangeur de chaleur selon la revendication 4 ou 5, dans lequel la barre hélicoïdale (22) peut être extraite d'une coque pour inspection.

7. Échangeur de chaleur selon l'une quelconque des revendications 1 à 6, dans lequel l'épaisseur des plaques en tube (6) est supérieure au diamètre des tubes.

8. Échangeur de chaleur selon l'une quelconque des revendications 1 à 7, dans lequel les plaques en tube (6) sont fixées de manière étanche aux extrémités respectives de la coque et les plaques en tube sont fixées de manière étanche aux tubes de manière à créer un espace intérieur scellé hermétiquement à l'intérieur de la coque avec une face des plaques en tube tournée vers l'intérieur de l'échangeur de chaleur et l'autre face des plaques en tube tournée vers une chambre d'admission ou d'évacuation.

9. Échangeur de chaleur selon l'une quelconque des revendications 1 à 8, dans lequel la distance de ligne centrale des tubes (2) s'étendant parallèlement e espacés étroitement est inférieure à deux fois le diamètre extérieur des tubes.

10. Échangeur de chaleur selon l'une quelconque des revendications 1 à 9, dans lequel les tubes (2) ont un diamètre extérieur de 10 mm à 50 mm.

11. Échangeur de chaleur selon l'une quelconque des revendications 1 à 10, dans lequel les tubes (2) sont insérés assez profondément dans les trous pour que les extrémités des tubes soient à ras de la face de la plaque en tube qui est tournée vers la chambre d'admission ou d'évacuation.

12. Échangeur de chaleur selon la revendication 11, dans lequel les tubes sont en outre soudés à la plaque en tube à l'extrémité des tubes pour connecter la plaque en tube (6) au niveau de la face extérieure de la plaque en tube par un joint soudé.

13. Échangeur de chaleur selon l'une quelconque des revendications 1 à 12, dans lequel le joint soudé (20) est créé par soudage depuis le lumen du tube, de sorte que le joint soudé est créé depuis l'intérieur du tube.

14. Procédé d'utilisation d'un produit alimentaire hygiénique pour échangeur de chaleur de produit alimentaire selon l'une quelconque des revendications 1 à 13, dans lequel un produit alimentaire liquide est autorisé à entrer au niveau de la première admission est à s'écouler à travers le lumen des tubes (2) jusqu'à la première évacuation et un second produit alimentaire liquide est autorisé à entrer au niveau de la seconde admission et à s'écouler à travers l'espace intérieur vers la seconde évacuation.

15. Utilisation d'un produit alimentaire hygiénique pour échangeur de chaleur de produit alimentaire selon l'une quelconque des revendications 1 à 13 pour le traitement alimentaire aseptique ou stérile.
